# EUROPEAN PATENT SPECIFICATION

(11) **EP 2 551 052 B1**
(45) Date of publication and mention of the grant of the patent: **10.12.2014**
(21) Application number: 12157619.3
(22) Date of filing: 01.03.2012
(51) Int. Cl.: B23Q 3/155

(54) **Tool changer with two fingers**
Werkzeugwechsler mit zwei Fingern
Changeur d'outil à deux doigts

(30) Priority: 29.07.2011 ES 201131323
(43) Date of publication of application: 30.01.2013
(73) Proprietor: A Ingenieria de Automatismos, S.A., 48213 Izurtza (Vizcaya) (ES)
(72) Inventor: Alberdi Velar, Jesús María, 48213 Izurtza (Vizcaya) (ES)
(74) Representative: Ungria López, Javier

(56) References cited:
- EP-A1- 0 481 275
- DE-A1- 19 935 369
- DE-A1-102008 020 489
- FR-A1- 2 623 742
- JP-A- 2005 028 488

## Description

### Object of the Invention

The present invention relates to an improved tool changer with a configuration and design allowing to use several types of tool holders for machining processes in automated machining centres, without requiring to assemble and disassemble the tool changer, and increasing its versatility and efficiency.

### Background of the Invention and Technical Problem to Solve

Currently, the use of machining centres is common in part machining processes. These machining centres are characterised by being fully automated centres in which CAD-CAM software is used to obtain the part from a block of material.

The parts are machined in these centres using several tools, which need to be changed during the machining process. To make it possible to exchange the tools, arms known as "tool changers" are used. The tool changers comprise "fingers" in charge of gripping elements known as "tool holders" to which are coupled the tools, such as mills, drill bits, etc. for their displacement from the machine tool store to the drive spindle, and vice versa. Several types of tool holders exist; the most widely used ones are the HSK Cone and the ISO Cone.

EP-0481275 discloses a tool changes according to the preamble of claim 1.

The problem with current tool changers is that they are designed for a specific type of tool holder. This is, depending on the tool changer installed in the machining centre, a single type of tool holder will be used, leading to a limitation in the machining centres. This limitation mainly results in less flexibility and, in turn, less productivity.

### Description of the invention

The invention described herein discloses an improved tool changer that allows using different types of tool holders by a design that allows obtaining different opening and closing positions for the fingers depending on the tool holder that is used. In turn, the fingers have a specific profile in each of the sectors defined to grip each type of tool holder.

The tool changer object of the invention is defined in claim 1 and comprises:
- at least two fingers as a means to grip a tool holder by a rotation motion of at least one of the fingers about a hinge integrally joined to this finger;
- an arm acting as a supporting structure that comprises the fingers on at least one of its ends, which in addition is attached to a shaft on which it moves and rotates about its own axis;
- at least one actuator to transmit motion.

The tool changer also comprises at least one cam, which comprises on one of its faces at least one groove that houses a follower provided in a finger.

A characteristic of the invention is that the cam is driven by the actuator to give it a linear displacement motion, and the cam in turn by the groove, transmits to said finger the rotation motion about the hinge. The actuator is controlled hydraulically.

The at least one groove of the cam comprises at least two straight segments joined to each other by curved segments. At least one straight segment of the at least two straight segments has a deviation defined by an angle "a" from 1° to 15° to a longitudinal axis of the cam.

A further characteristic of the improved tool changer object of the invention is that the fingers, in an end area thereof and on their inner face, comprise a contact area for the tool holder provided with a number of grip areas corresponding to the number of straight segments comprised in the cam groove. The grip areas comprise curvatures with radii matching those of the tool holders to be gripped.

Yet another characteristic of the invention is that the at least one groove of the cam comprises a fourth straight segment for obtaining a greater opening of the fingers than that required to grip the tool holder with the largest diameter in its area of contact with the fingers. This fourth segment is open to the outside of the cam in order to exchange the cam. The at least one groove of the cam comprises a third curved segment between the fourth straight segment and a third straight segment.

The tool changer object of the invention comprises at least one spring which, on one of its ends, is in contact with the cam, pushing on it to keep the fingers tight against the tool holder in case the hydraulic system malfunctions.

### Description of the Drawings

In order to help understand the description being made, this specification is completed by a set of drawings where, for purposes of illustration only and in a non-limiting sense, the following is shown:
- Figure 1 shows a perspective view of the top part of the improved tool changer object of the invention.
- Figure 2 shows a perspective view of the bottom part of the improved tool changer object of the invention.
- Figure 3 shows a perspective view of a cross-section of the end of the improved tool changer object of the invention.
- Figure 4.a shows a perspective view of the grip of a first tool holder.

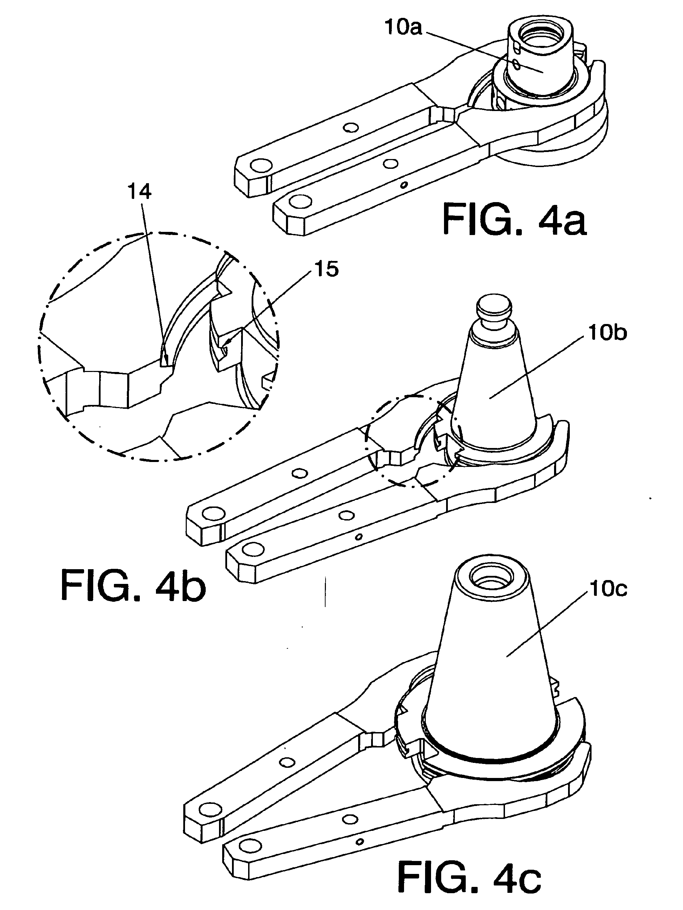

- Figure 4.b shows a perspective view of a grip of a second tool holder with an enlarged view of a union area.
- Figure 4.c shows a perspective view of the grip of a third tool holder.

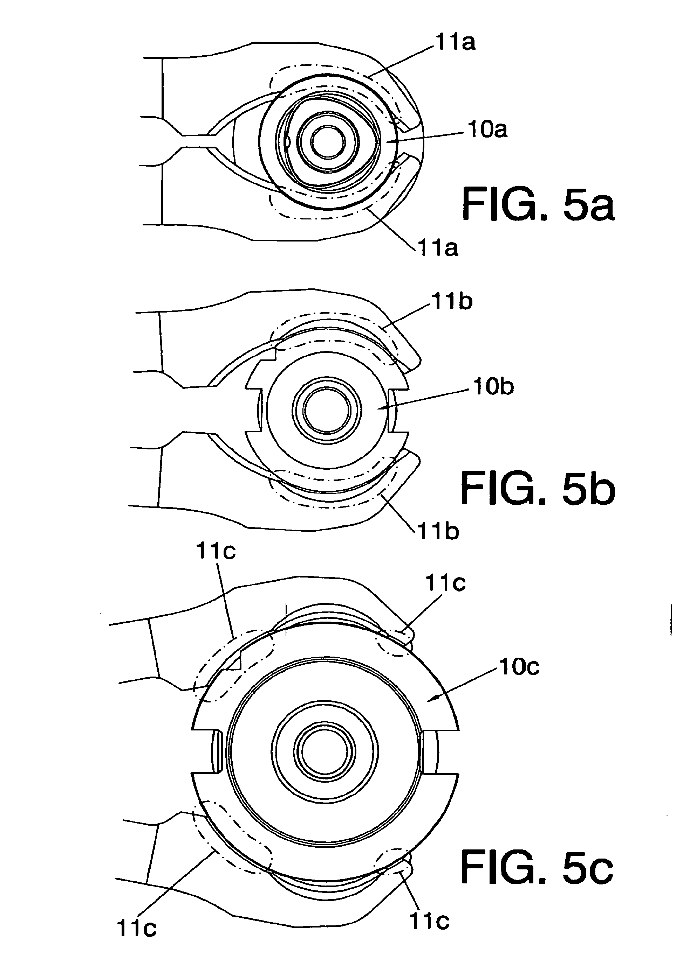

- Figure 5.a shows a plan view of a grip situation of the first tool holder.
- Figure 5.b shows a plan view of a grip situation of the second tool holder.
- Figure 5.c shows a plan view of a grip situation of the third tool holder.

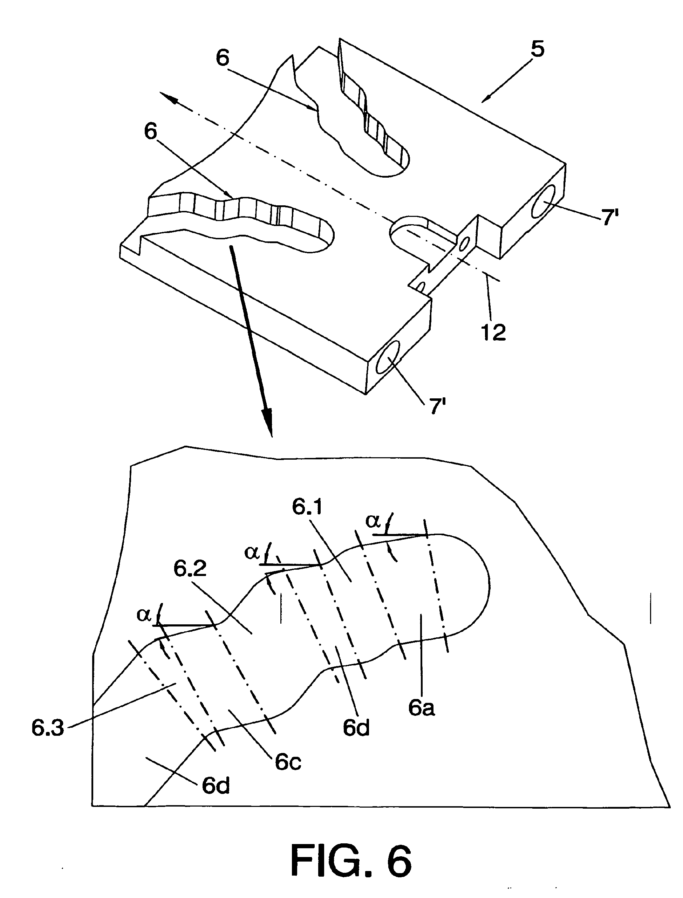

- Figure 6 shows a perspective view and an enlarged view of a cam of the improved tool changer object of the invention.

A list is given below of the different elements shown in the figures that comprise the invention:
1 = Arm
2 = Fingers
2' = Outer end of fingers
3 = Follower
4 = Hinge
5 = Cam
6 = Groove
6.a = First straight segment
6.b = Second straight segment
6.c = Third straight segment
6.d = Fourth straight segment
6.1 = First curved segment
6.2 = Second curved segment
6.3 = Third curved segment
7 = Spring
7' = Orifice
8 = Actuator
9 = Cover
10 = Tool holder
10.a = First tool holder
10.b = Second tool holder
10.c = Third tool holder
11 = Grip areas
11.a = First grip area
11.b = Second grip area
11.c = Third grip area
12 = Longitudinal axis
13 = Cylindrical element
14 = Longitudinal protrusion
15 = Groove

### Detailed Description of the Preferred Embodiment of the Invention

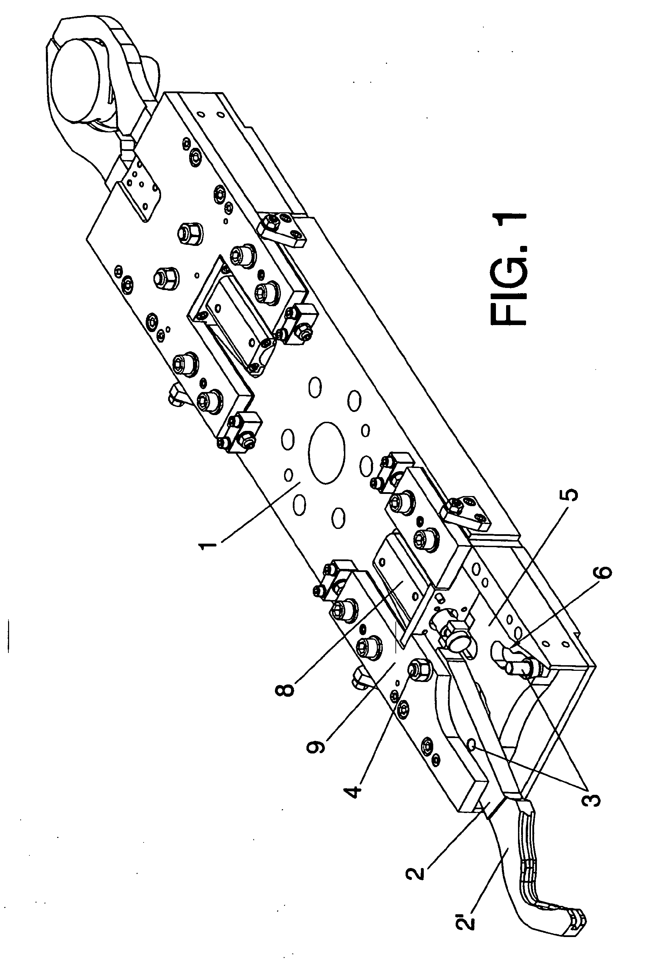

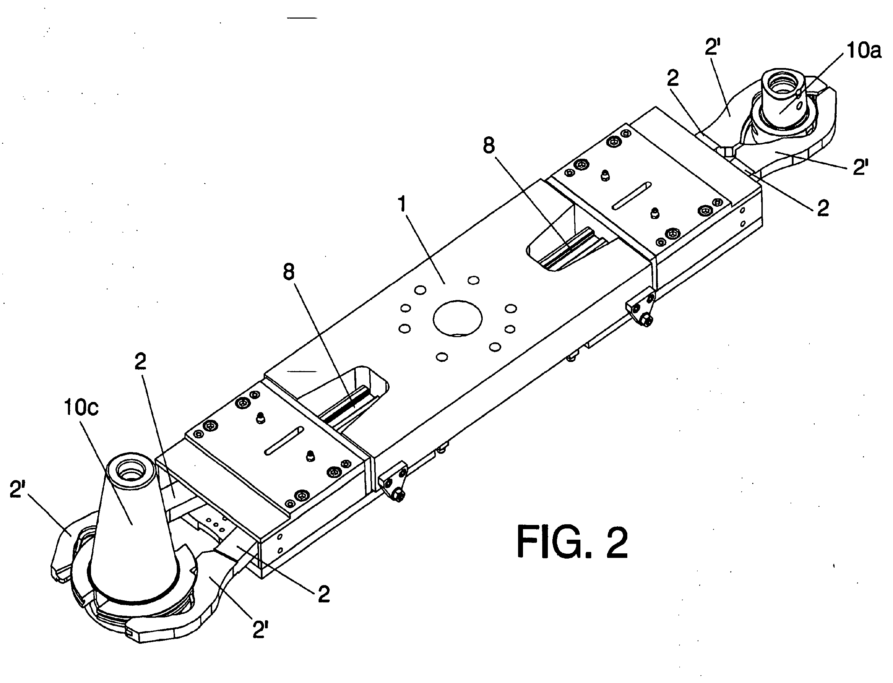

As stated above, and as can be seen in figures 1 and 2, the improved tool changer is formed from an arm (1) as a supporting structure.

The arm (1) comprises on each of its ends a "claw" for gripping a tool holder. Each claw is a pair of fingers (2) hinged on a fixed point (4). In addition, each of these fingers (2) comprises a follower (3), which moves along a groove (6) made on one of the faces of a cam (5). The displacement of the follower (3) in the groove (6) is caused by the linear motion transmitted by an actuator (8) to the cam (5), the cam (5) in turn transmitting an opening and closing movement to the fingers (2).

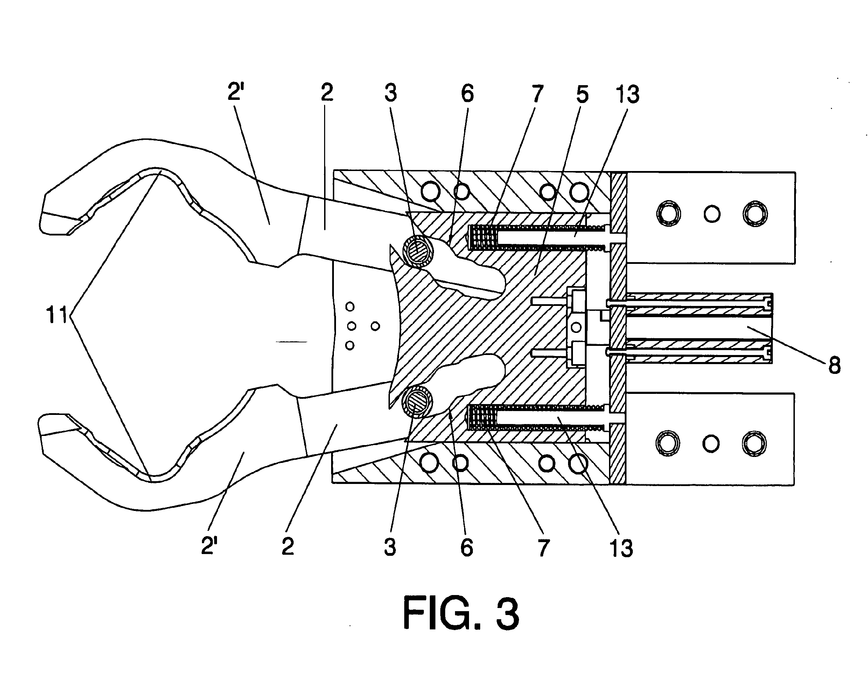

Figure 3 shows the presence under a cover (9) (shown in figure 1) of some springs (7), in addition to the cam (5) and the aforementioned followers (3) among other elements. In each of these springs (7) is inserted a cylindrical element (13). This cylindrical element (13) carries out a guiding function for the springs (7) and is attached to the arm (1) at one of its ends, while the other end, as the spring (7) that surrounds it, is inserted in an orifice (7') made in the cam (5).

This assembly formed by the springs (7) and the cylindrical elements (13) determine a safety system. If the actuator (8) fails, no longer transmitting any motion to the fingers (2) by the linear displacement of the cam (5), the springs (7) and the cylindrical elements (13) ensure the irreversible closing motion of the fingers (2). This occurs when the springs (7) are in a compressed state, except in the completely closed state of the fingers (2). In this way, the springs (7) maintain the pressure exerted by the fingers (2) on the tool holder (10), preventing the tool holder (10) from being released accidentally with the resulting negative consequences.

Figures 4.a, 4.b and 4.c, together with figures 5.a, 5.b and 5.c, show how the fingers (2) of the tool changer, object of the invention, allow gripping the most commonly used different tool holders (10.a, 10.b, 10.c) by different grip areas (11.a, 11.b, 11.c) respectively. This is possible because the fingers (2) on their ends (2') are provided in the inner part of said grip areas (11.a, 11.b, 11.c), and along them, with a longitudinal protrusion (14) (which can be seen in the enlarged view of figure 4). These longitudinal protrusions (14) are meant to be inserted in a groove (15) of the tool holders (10), which is conventionally included in a circular contact area. In addition, the grip area (11) has different curvatures. These curvatures allow the fingers (2) to adjust precisely to the circular contact area of the different tool holders (10).

Figure 6 shows the cam (5), in which a longitudinal axis (12) can be seen that divides the cam (5) into two symmetrical parts with respect to the longitudinal axis (12). Also are shown some orifices (7') that house the springs (7), a zone between the orifices (7') in which is fixed the moving end of the actuator (8) that transmits the motion to the cam (5), and the two grooves (6), symmetrical to each other with respect to the longitudinal axis (12).

Each of these grooves (6) comprises three straight segments (6.a, 6.b, 6.c) and two curved segments (6.1, 6.2), as seen in the enlarged view of figure 6. In addition, the groove (6) comprises a fourth straight segment (6.d) that allows a greater opening of the fingers (2) than that required for gripping in the case of the third tool holder (10.c), this is, the one with the largest diameter, in order to grip it or release it. In addition, the fourth straight segment (6.d) is open to the outside of the cam (5) to allow removing the follower (3) from the groove (6) and thereby release the cam (5), when it is necessary to replace it in order to hold tool holders (10) with different diameters, by a configuration based on a groove (6) and a grip area (11) adapted to the new diameters of the tool holders.

The first curved segment (6.1) corresponds to the area of transition between the first straight segment (6.a) and the second straight segment (6.b), while the second curved segment (6.2) corresponds to the area of transition between the second straight segment (6.b) and the third straight segment (6.c). It is also shown a third curved segment (6.3) that corresponds to the area of transition between the third straight segment (6.c) and the fourth straight segment (6.d).

The straight segments (6.a, 6.b, 6.c) have a deviation defined by an angle "α" from 1° to 15° to the longitudinal axis (12) of the cam (5). This angle "α" allows exerting a grip force on the tool holders (10) while providing a displacement of the follower (3) through the groove (6) from a straight segment (6.a, 6.b, 6.c) to an adjacent curved segment (6.1, 6.2).

The first straight segment (6.a) coincides with the grip of the first tool holder (10.a), the second straight segment (6.b) coincides with the grip of the second tool holder (10.b) and the third straight segment (6.c) coincides with the grip of the third tool holder (10.c).

Therefore, it is the combination of the grip areas (11.a, 11.b, 11.c) in the outer ends of the fingers (2') with the opening and closing motion of the fingers (2), as a result of including the cam (5), what allows ensuring that the different tool holders (10.a, 10.b, 10.c) are properly held, without requiring to change the tool changer.

## Claims

1. Tool changer comprising:
- at least two fingers (2) as a means to grip a tool holder (10) by a rotation motion of at least one of the fingers (2) about a hinge (4) integrally joined to said finger (2);
- an arm (1) acting as a supporting structure that comprises the fingers (2) on at least one of its ends;
- at least one actuator (8) to transmit a motion; and
- at least one cam (5);
**characterised in that**:
- the arm (1) is attached to a shaft on which it moves and rotates about its own axis;
- the at least one cam (5) comprises on one of its faces at least one groove (6) that houses a follower (3) provided in a finger (2); and
- the at least one groove (6) of the cam (5) comprises at least two straight segments (6.a, 6.b, 6.c) joined to each other by curved segments (6.1, 6.2);
wherein the cam (5) is driven by the actuator (8) to give it a linear displacement motion, and the cam (5) in turn by means of the groove (6), transmits to said finger (2) the rotation motion about the hinge (4).

2. Tool changer according to claim 1, wherein at least one straight segment of the at least two straight segments (6.a, 6.b, 6.c) has a deviation defined by an angle "α" from 1° to 15° to a longitudinal axis (12) of the cam (5).

3. Tool changer according to any of the above claims, wherein the fingers (2), at an end area (2') thereof and on their inner face, comprise a contact area for the tool holder (10) provided with a number of grip areas (11.a, 11.b, 11.c) corresponding to the number of straight segments (6.a, 6.b, 6.c) comprised in the groove (6) of the cam (5).

4. Tool changer according to claim 3, wherein the grip areas (11.a, 11.b, 11.c) comprise radii of curvature matching those of the tool holders (10.a, 10.b, 10.c) to be held.

5. Tool changer according to claim 1, wherein the at least one groove (6) of the cam (5) comprises a fourth straight segment (6.d) to achieve a greater opening of the fingers (2) than that required to hold the tool holder (10.c) with the greatest diameter at its area of contact with the fingers (2).

6. Tool changer according to claim 5, wherein the fourth straight segment (6.d) is open to the outside of the cam (5) in order to change the cam (5).

7. Tool changer according to claim 5, wherein the at least one groove (6) of the cam (5) comprises a third curved segment (6.3) between the fourth straight segment (6.d) and a third straight segment (6.c).

8. Tool changer according to claim 1, wherein it comprises at least one spring (7) which, on one of its ends, is in contact with the cam (5), pushing on it to keep the fingers (2) tight against the tool holder (10) in case the actuator (8) malfunctions.

9. Tool changer according to claim 1, wherein the actuator (8) is controlled hydraulically.

## Patentansprüche

1. Werkzeugwechsler, der umfasst:
- wenigstens zwei Finger (2) als eine Einrichtung zum Greifen eines Werkzeughalters (10) mittels einer Drehbewegung wenigstens eines der Finger (2) um ein Gelenk (14) herum, das integral mit dem Finger (2) verbunden ist;
- einen Arm (1), der als eine Tragestruktur wirkt, die die Finger (2) an wenigstens einem ihrer Enden umfasst;
- wenigstens ein Stellglied (8) zum Übertragen einer Bewegung; und
- wenigstens einen Nocken (5);
**dadurch gekennzeichnet, dass**
- der Arm (1) an einer Welle angebracht ist, an der er sich bewegt und sich um seine eigene Achse dreht;
- der wenigstens eine Nocken (5) an einer seiner Flächen wenigstens eine Nut (6) umfasst, die wenigstens ein Eingriffsglied (3) aufnimmt, das an einem Finger (2) vorhanden ist; und
- die wenigstens eine Nut (6) des Nockens (5) wenigstens zwei gerade Segmente (6.a, 6.b, 6.c) umfasst, die über gekrümmte Segmente (6.1, 6.2) miteinander verbunden sind;
wobei der Nocken (5) von dem Stellglied (8) angetrieben wird, um ihn in eine lineare Verschiebungsbewegung zu versetzen, und der Nocken (5) seinerseits über die Nut (6) die Drehbewegung um das Gelenk (4) herum auf den Finger (2) überträgt.

2. Werkzeugwechsler nach Anspruch 1, wobei wenigstens ein gerades Segment der wenigstens zwei geraden Segmente (6.a, 6.b, 6.c) eine Abweichung von einer Längsachse (12) des Nockens (5) hat, die durch einen Winkel "α" von 1° bis 15° definiert wird.

3. Werkzeugwechsler nach einem der vorangehenden Ansprüche, wobei die Finger (2) an einem Endbereich (2') derselben und an ihrer Innenfläche einen Kontaktbereich für den Werkzeughalter (10) umfassen, der mit einer Anzahl von Greifbereichen (11.a, 11.b, 11.c) versehen ist, die der Anzahl gerader Segmente (6.a, 6.b, 6.c) entsprechen, die in der Nut (6) des Nockens (5) enthalten sind.

4. Werkzeugwechsler nach Anspruch 3, wobei die Greifbereiche (11.a, 11.b, 11.c) Krümmungsradien umfassen, die denen der zu haltenden Werkzeughalter (10.a, 10.b, 10.c) entsprechen.

5. Werkzeugwechsler nach Anspruch 1, wobei die wenigstens eine Nut (6) des Nockens (5) ein viertes gerades Segment (6.d) umfasst, um eine größere Öffnung der Finger (2) als diejenige zu erreichen, die erforderlich ist, um den Werkzeughalter (10.c) mit dem größten Durchmesser an seinem Kontaktbereich mit den Fingern (2) zu halten.

6. Werkzeugwechsler nach Anspruch 5, wobei das vierte gerade Segment (6.d) zum Wechseln des Nockens (5) zur Außenseite des Nockens (5) hin offen ist.

7. Werkzeugwechsler nach Anspruch 5, wobei die wenigstens eine Nut (6) des Nockens (5) ein drittes gekrümmtes Segment (6.3) zwischen dem vierten geraden Segment (6.d) und einem dritten geraden Segment (6.c) umfasst.

8. Werkzeugwechsler nach Anspruch 1, wobei er wenigstens eine Feder (7) umfasst, die an einem ihrer Enden in Kontakt mit dem Nocken (5) ist und auf ihn drückt, um die Finger (2) eng an dem Werkzeughalter (10) zu halten, wenn das Stellglied (8) Fehlfunktion aufweist.

9. Werkzeugwechsler nach Anspruch 1, wobei das Stellglied (8) hydraulisch gesteuert wird.

## Revendications

1. Changeur d'outil comprenant :
au moins deux doigts (2) en tant que moyen pour saisir un support d'outil (10) par un mouvement de rotation d'au moins l'un des doigts (2) autour d'une charnière (4) assemblée de manière solidaire audit doigt (2) ;
un bras (1) servant de structure de support qui comprend les doigts (2) sur au moins l'une de ses extrémités ;
au moins un actionneur (8) pour transmettre un mouvement; et
au moins une came (5) ;
**caractérisé en ce que** :
le bras (1) est fixé à un arbre sur lequel il se déplace et tourne autour de son propre axe ;
la au moins une came (5) comprend l'une de ses faces au niveau d'au moins une rainure (6) qui loge un poussoir (3) prévu dans un doigt (2) ; et
la au moins une rainure (6) de la came (5) comprend au moins deux segments droits (6.a, 6.b, 6.c) assemblés entre eux par des segments incurvés (6.1, 6.2) ;
dans lequel la came (5) est entraînée par l'actionneur (8) pour lui donner un mouvement de déplacement linéaire, et la came (5), à son tour, au moyen de la rainure (6), transmet audit doigt (2), le mouvement de rotation autour de la charnière (4).

2. Changeur d'outil selon la revendication 1, dans lequel au moins un segment droit des au moins deux segments droits (6a., 6.b, 6.c) a une déviation définie par un angle "α" de 1° à 15° par rapport à un axe longitudinal (12) de la came (5).

3. Changeur d'outil selon l'une quelconque des revendications précédentes, dans lequel les doigts (2), au niveau de leur zone d'extrémité (2') et sur leur face interne, comprennent une zone de contact pour le support d'outil (10) doté d'un certain nombre de zones de préhension (11.a, 11.b, 11.c) correspondant au nombre de segments droits (6.a, 6.b, 6.c) compris dans la rainure (6) de la came (5).

4. Changeur d'outil selon la revendication 3, dans lequel les zones de préhension (11.a, 11.b, 11.c) comprennent des rayons de courbure correspondant à ceux des supports d'outil (10.a, 10.b, 10.c) à maintenir.

5. Changeur d'outil selon la revendication 1, dans lequel la au moins une rainure (6) de la came (5) comprend un quatrième segment droit (6.d) pour obtenir une plus grande ouverture des doigts (2) que ce qui est nécessaire pour maintenir le support d'outil (10.c) avec le plus grand diamètre au niveau de sa zone de contact avec les doigts (2).

6. Changeur d'outil selon la revendication 5, dans lequel le quatrième segment droit (6.d) est ouvert sur l'extérieur de la came (5) afin de modifier la came (5).

7. Changeur d'outil selon la revendication 5, dans lequel la au moins une rainure (6) de la came (5) comprend un troisième segment incurvé (6.3) entre le quatrième segment droit (6.d) et un troisième segment droit (6.c).

8. Changeur d'outil selon la revendication 1, dans lequel il comprend au moins un ressort (7) qui, sur l'une de ses extrémités, est en contact avec la came (5), en la poussant pour maintenir les doigts (2) serrés contre le support d'outil (10) dans le cas où l'actionneur (8) présenterait un dysfonctionnement.

9. Changeur d'outil selon la revendication 1, dans lequel l'actionneur (8) est commandé hydrauliquement.
